# EUROPÄISCHE PATENTANMELDUNG

(11) **EP 4 524 813 A1**
(43) Veröffentlichungstag der Anmeldung: **19.03.2025**
(21) Anmeldenummer: 24196106.9
(22) Anmeldetag: 23.08.2024
(51) Int. Cl.: G06K 7/10, H01Q 1/22

(54) **VORRICHTUNG ZUM BESCHREIBEN UND/ODER AUSLESEN VON RFID-TAGS**

(30) Priorität: 13.09.2023 DE 102023124739
(71) Anmelder: Bundesdruckerei GmbH, 10969 Berlin (DE)
(72) Erfinder: HERRMANN, Dr. Klaus, 30625 Hannover (DE)
(74) Vertreter: Patentship Patentanwaltsgesellschaft mbH

(57) **Zusammenfassung**

Die Erfindung betrifft eine Vorrichtung zum parallelen Beschreiben und/oder Auslesen einer Vielzahl von RFID-Tags. Hierzu umfasst die Vorrichtung für jeden RFID-Tag ein Schreib-Lese-Modul (100), wobei jedes Schreib-Lese-Modul (100) eine Abschirmgehäuseanordnung (120, 130) mit einem Innengehäuse (120) und einem Außengehäuse (130) sowie eine RFID-Antenne (110) umfasst, welche in dem Innengehäuse (120) angeordnet ist und ausgebildet ist, mit dem RFID-Tag zu wechselwirken. Das Innengehäuse (120) und das Außengehäuse (130) sind beabstandet voneinander angeordnet und ausgebildet, ein Übersprechen zu einem benachbarten Schreib-Lese-Modul (100) der Vorrichtung zu verhindern.

## Beschreibung

Die vorliegende Erfindung betrifft eine Vorrichtung zum parallelen Beschreiben und/oder Auslesen einer Vielzahl von RFID-Tags.

In Produktionsanlagen müssen häufig mehrere Radio Frequency Identification Device Tags (RIFD-Tags) gleichzeitig, d.h. parallel ausgelesen oder beschrieben werden. Dazu kommen in der Regel mehrere RFID-Reader zum Einsatz, auf welche die RFID-Tags aufgelegt werden. Die RFID-Reader arbeiten beispielsweise bei einer Frequenz von 13,56 MHz und übertragen über das hochfrequente elektromagnetische Feld Energie an die RFID-Tags. Durch eine Modulation des hochfrequenten Feldes kann die gewünschte Information übertragen werden.

Bei einem zeitgleichen Auslesen und/oder Beschreiben von RFID-Tags durch mehrere unmittelbar benachbarte RFID-Reader kann es dabei zu einem Übersprechen (auch als Crosstalk bekannt) zwischen den Antennen benachbarter RFID-Reader kommen. Dabei gelangt das modulierte HF-Signal eines RFID-Readers zu einem benachbarten RFID-Reader, so dass entweder der RFID-Reader das Signal des aufgelegten RFID-Tags nicht korrekt demodulieren kann oder umgekehrt der RFID-Tag das Signal des RFID-Readers nicht korrekt demodulieren kann. Ein solches Übersprechen kann zu Bit-Fehlern führen, bei denen einzelne Informationseinheiten fehlerhaft übertragen werden. Treten diese Bit-Fehler gehäuft auf, so kann auch ein häufig zur Sicherung der Datenübertragung verwendeter Error-Correction-Code diese Fehler nicht mehr korrigieren, so dass es zu einem Abbruch der Datenübertragung kommen kann.

Zur Vermeidung solcher Effekte ist es beispielsweise aus der DE102013100981 bekannt, ein Gehäuse zum Abschirmen des HF-Feldes zwischen benachbarten RFID-Readern zu verwenden, wofür häufig metallische Materialien, wie beispielsweise Aluminium, Kupfer, Eisen oder Ferrite verwendet werden. Je nach Abstand von der Antenne und Materialtyp hat ein solches Gehäuse allerdings einen Einfluss auf das von einem RFID-Reader erzeugte Feld. Beispielsweise werden bei der Verwendung eines Gehäuses bzw. einer Abschirmung aus Eisen Wirbelströme in der Abschirmung induziert, welche die Feldstärke reduzieren. Bei der Verwendung von Abschirmungen aus Aluminium und Kupfer kommt es häufig zu einer Veränderung der Resonanzfrequenz und/oder der Impedanz der Antenne eines RFID-Readers, was zu Folge hat, dass eine Antenne des RFID-Readers nicht mehr optimal an die Elektronik des RFID-Readers angepasst ist. Zusätzlich eingesetzte Ferritfolien können eine derartige Verstimmung der Antenne eines herkömmlichen RFID-Readers zwar reduzieren, erhöhen aber signifikant die Kosten des Gesamtsystems.

Es ist die Aufgabe der vorliegenden Erfindung, eine verbesserte Vorrichtung zum parallelen Beschreiben und/oder Auslesen einer Vielzahl von RFID-Tags bereitzustellen.

Diese Aufgabe wird durch die Merkmale des unabhängigen Anspruches gelöst. Vorteilhafte Ausbildungsformen sind Gegenstand der abhängigen Patentansprüche, der Beschreibung sowie der Figuren.

Es wird eine Vorrichtung zum parallelen Beschreiben und/oder Auslesen einer Vielzahl von RFID-Tags bereitgestellt. Hierzu umfasst die Vorrichtung für jeden RFID-Tag ein Schreib-Lese-Modul, wobei jedes Schreib-Lese-Modul eine Abschirmgehäuseanordnung mit einem Innengehäuse und einem Außengehäuse sowie eine RFID-Antenne umfasst, welche in dem Innengehäuse angeordnet ist und ausgebildet ist, mit dem RFID-Tag zu wechselwirken. Das Innengehäuse und das Außengehäuse sind beabstandet voneinander angeordnet und ausgebildet, ein Übersprechen zu einem benachbarten Schreib-Lese-Modul der Vorrichtung zu verhindern. Somit wird eine Vorrichtung zum parallelen Beschreiben und/oder Auslesen einer Vielzahl von RFID-Tags bereitgestellt, welche aufgrund der Abschirmgehäuseanordnung mit dem Innengehäuse und dem davon beabstandeten Außengehäuse ein Übersprechen zwischen den RFID-Antennen benachbarter Schreib-Lese-Module reduziert. Vorzugsweise ist durch den Abstand das Außengehäuse elektrisch von dem Innengehäuse entkoppelt. Mit anderen Worten: vorzugsweise sind das Außengehäuse und das Innengehäuse nicht elektrisch leitend miteinander verbunden, wodurch sich das Übersprechen zwischen den RFID-Antennen benachbarter Schreib-Lese-Module weiter reduzieren lässt.

Gemäß einer bevorzugten Ausführungsform kann das Innengehäuse aus Aluminium bestehen, also als ein leichtes und kostengünstiges Bauteil bereitgestellt werden.

In einer bevorzugten Ausführungsform kann das Innengehäuse Seitenwände umfassen, welche einen um die RFID-Antenne umlaufenden Rahmen definieren. Vorteilhafterweise kann durch die Ausbildung des Innengehäuses in Form eines horizontal umlaufenden Rahmens die Ausbreitung des von der RFID-Antenne erzeugten elektromagnetischen Feldes vertikal in Richtung des RFID-Tags und einer Bodenwand des Außengehäuses gebündelt werden. Hierdurch kann wiederum der horizontale Abstand zwischen den Seitenwänden des Innengehäuses und Seitenwänden des Außengehäuses reduziert werden, so dass weniger Bauraum verbraucht wird.

Gemäß einer bevorzugten Ausführungsform umfasst das Innengehäuse ein gebogenes Blech. Bei dieser bevorzugten Ausführungsform lässt sich das Innengehäuse einfach und kostengünstig herstellen.

In einer bevorzugten Ausführungsform kann zur Vermeidung von Wirbelströmen in dem Innengehäuse in zumindest einer Seitenwand des Innengehäuses ein Luftspalt ausgebildet sein, wodurch sich eine negative Beeinflussung des Strahlungsverhaltens der RFID-Antenne durch Wirbelströme in dem Innengehäuse vermeiden oder zumindest reduzieren lässt.

Gemäß einer bevorzugten Ausführungsform kann der in zumindest einer der Seitenwände des Innengehäuses ausgebildete Luftspalt eine Breite zwischen 0,1, 0,2, 0,3 oder 0,4 und 0,6, 0,7, 0,8, 0,9 oder 1 Millimeter, insbesondere ungefähr 0,5 Millimeter aufweisen.

In einer bevorzugten Ausführungsform kann das Außengehäuse Seitenwände und eine Bodenwand umfassen, welche einen das Innengehäuse mit der darin montierten RFID-Antenne umschließenden Becher mit rechteckigem Querschnitt definieren, wodurch sich das Übersprechen zwischen den RFID-Antennen benachbarter Schreib-Lese-Module weiter reduzieren lässt.

Gemäß einer bevorzugten Ausführungsform umfasst jedes Schreib-Lese-Modul ferner einen oder mehrere Abstandshalter, welche ausgebildet sind, das Innengehäuse mit der darin montierten RFID-Antenne in einem definierten vertikalen Abstand von der Bodenwand des Außengehäuses zu halten. Vorzugsweise sind die Abstandshalter elektrisch nicht leitfähig. Mittels der Abstandshalter lässt sich kostengünstig zum einen der gewünschte vertikale Abstand zwischen der Bodenwand des Außengehäuses und dem Innengehäuse und der darin angeordneten RFID-Antenne herstellen und zum anderen das Innengehäuse an dem Außengehäuse befestigen. Das Außengehäuse wiederum kann an dessen Unterseite mit einem Maschinenkörper befestigt sein.

In einer bevorzugten Ausführungsform beträgt der definierte vertikale Abstand des Innengehäuses mit der darin montierten RFID-Antenne wenigstens 5 Zentimeter von der Bodenwand des Außengehäuses.

Gemäß einer bevorzugten Ausführungsform ist der definierte vertikale Abstand des Innengehäuses mit der darin montierten RFID-Antenne von der Bodenwand des Außengehäuses größer als ein definierter vertikaler Abstand zwischen der RFID-Antenne und einer Bodenwand des Innengehäuses.

In einer bevorzugten Ausführungsform sind der eine oder die mehreren Abstandshalter ferner ausgebildet, das Innengehäuse mit der darin montierten RFID-Antenne in einem definierten horizontalen Abstand zwischen zumindest einer Seitenwand des Innengehäuses und der entsprechenden Seitenwand des Außengehäuses zu halten, wobei der definierte horizontalen Abstand zwischen der zumindest einen Seitenwand des Innengehäuses und der entsprechenden Seitenwand des Außengehäuses wenigstens 1 Zentimeter beträgt.

Gemäß einer bevorzugten Ausführungsform ist der definierte vertikale Abstand des Innengehäuses mit der darin montierten RFID-Antenne von der Bodenwand des Außengehäuses größer als der definierte horizontale Abstand zwischen der zumindest einen Seitenwand des Innengehäuses und der entsprechenden Seitenwand des Außengehäuses. Bei dieser Ausführungsform hat jedes Schreib-Lese-Modul geeignete optimierte Abmessungen, um zum einen das Übersprechen zwischen den RFID-Antennen benachbarter Schreib-Lese-Module zu reduzieren und zum anderen keinen Bauraum in horizontaler Richtung zu verschwenden.

Gemäß einer bevorzugten Ausführungsform kann das Außengehäuse ein gebogenes Blech umfassen. Bei dieser bevorzugten Ausführungsform lässt sich das Außengehäuse einfach und kostengünstig herstellen.

In einer bevorzugten Ausführungsform kann zur Vermeidung von Wirbelströmen in dem Außengehäuse zwischen zumindest einem Paar von benachbarten Seitenwänden des Außengehäuses ein Luftspalt ausgebildet sein, wodurch sich eine negative Beeinflussung des Strahlungsverhaltens der RFID-Antenne durch Wirbelströme in dem Außengehäuse vermeiden oder zumindest reduzieren lässt.

Gemäß einer bevorzugten Ausführungsform kann der zwischen zumindest einem Paar von benachbarten Seitenwänden des Außengehäuses ausgebildete Luftspalt eine Breite zwischen 0,1, 0,2, 0,3 oder 0,4 und 0,6, 0,7, 0,8, 0,9 oder 1 Millimeter, insbesondere ungefähr 0,5 Millimeter aufweisen.

Gegenüber herkömmlichen Vorrichtungen, bei denen eine einzelne Schirmungsebene verwendet wird, ist bei der erfindungsgemäßen Vorrichtung durch das Innengehäuse und das Außengehäuse eine doppelte Abschirmung vorgesehen. Dabei ist das Innengehäuse, d.h. die innere Schirmung nahe der RFID-Antenne angebracht und so ausbildet, dass die Resonanzfrequenz und die Impedanz der RFID-Antenne nur wenig beeinflusst wird. Das Außengehäuse, d.h. die äußere Schirmung ist von der RFID-Antenne weiter entfernt angeordnet und kann gemäß einer Ausführungsform die RFID-Antenne an fünf Seiten vollständig abschirmen, nämlich der Bodenwand und den vier Seitenwänden des Außengehäuses, wodurch das Übersprechen zu benachbarten Schreib-Lese-Modulen der Vorrichtung deutlich reduziert werden kann.

Weitere Ausführungsbeispiele werden Bezug nehmend auf die beiliegenden Figuren näher erläutert. Es zeigen:
- Fig. 1a-c: eine perspektivische Ansicht sowie Seitenansichten eines Schreib-Lese-Moduls mit einer Abschirmgehäuseanordnung für eine RFID-Antenne, wobei das Schreib-Lese-Modul Teil einer Vorrichtung zum Auslesen und/oder Beschreiben einer Vielzahl von RFID-Tags gemäß einer Ausführungsform ist;
- Fig. 2a,b: eine schematische Draufsicht und eine schematische Seitenansicht einer Vorrichtung zum Auslesen und/oder Beschreiben einer Vielzahl von RFID-Tags gemäß einer Ausführungsform mit einer als Array angeordneten Vielzahl von Schreib-Lese-Modulen nach den Figuren 1a-c;
- Fig. 3a-d: eine perspektivische Ansicht, Seitenansichten sowie eine Stirnansicht eines Innengehäuses der Abschirmgehäuseanordnung des Schreib-Lese-Moduls der Fig. 1a-c; und
- Fig. 4: eine Draufsicht eines zugeschnittenen Bleches zum Ausbilden eines Außengehäuses der Abschirmgehäuseanordnung des Schreib-Lese-Moduls der Fig. 1a-c.

Elemente der nachfolgenden im Detail beschriebenen Ausführungsformen, die einander entsprechen, werden mit so weit wie möglich denselben Bezugszeichen gekennzeichnet.

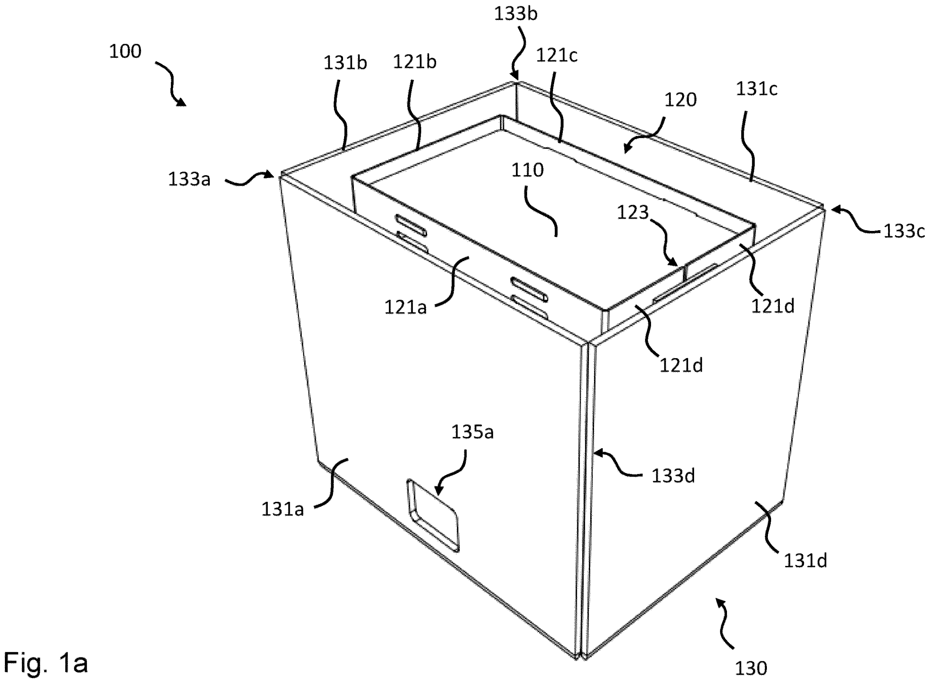

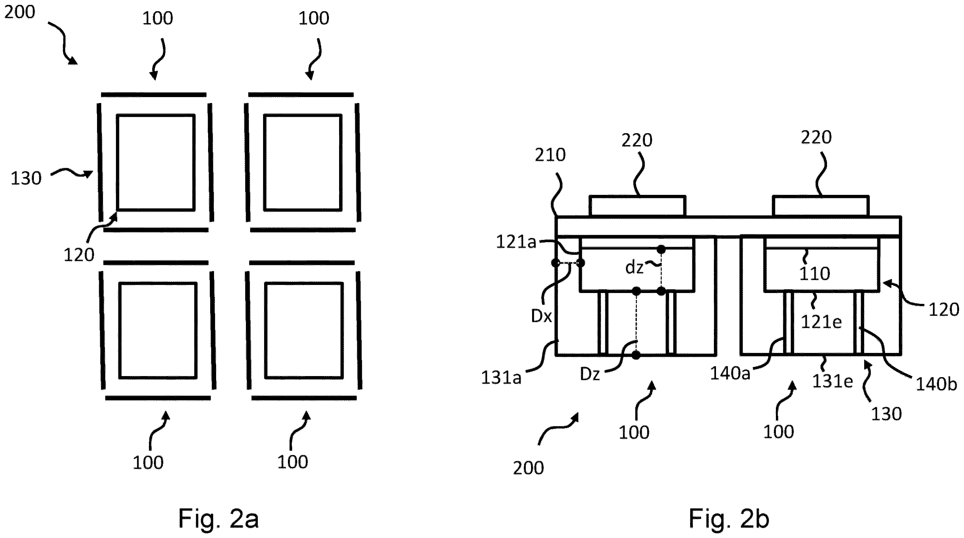

Die Figuren 1a-c zeigen eine perspektivische Ansicht sowie zwei Seitenansichten eines Schreib-Lese-Moduls 100 (auch als RFID-Reader 100 bekannt) einer Vorrichtung 200 (welche schematisch in den Figuren 2a und 2b dargestellt) mit einer Vielzahl von Schreib-Lese-Modulen 100 zum parallelen Auslesen und/oder Beschreiben einer Vielzahl von RFID-Tags 220. Ein solches paralleles Auslesen und/oder Beschreiben einer Vielzahl von RFID-Tags 220 kann beispielsweise im Rahmen der Herstellung, insbesondere der Personalisierung der Vielzahl von RFID-Tags 220 zum Einsatz kommen.

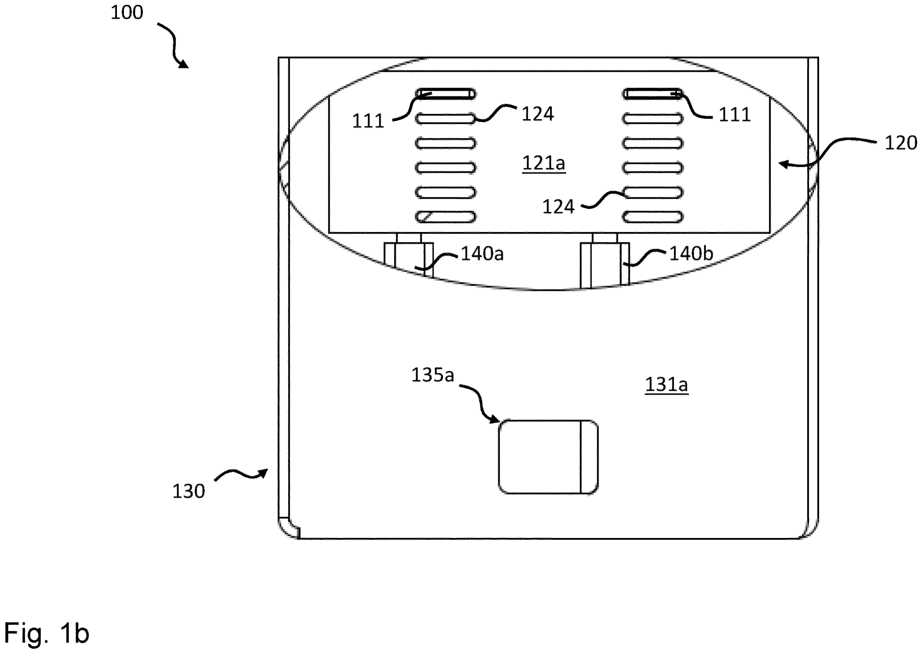

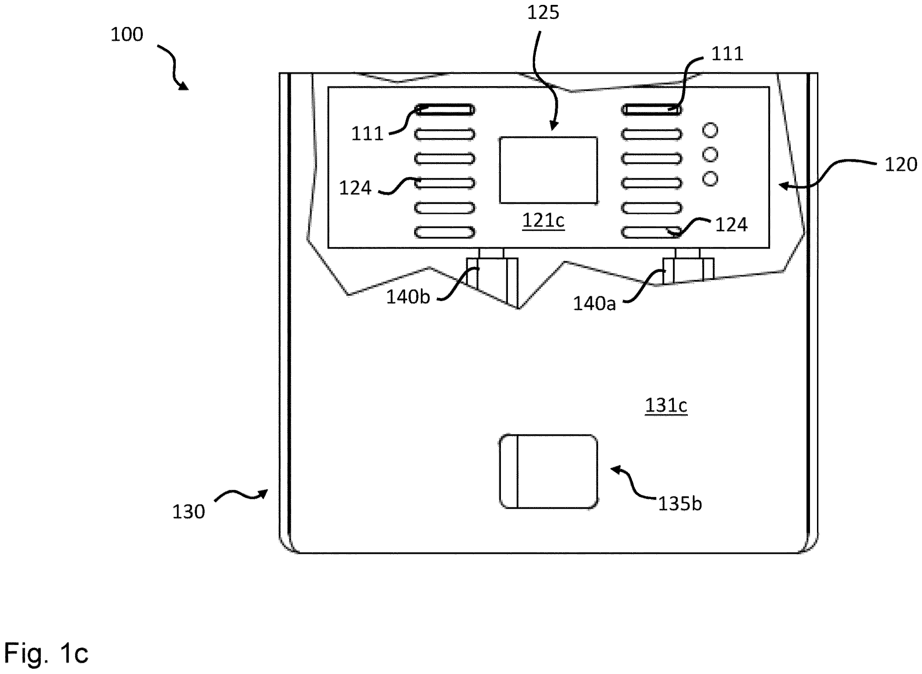

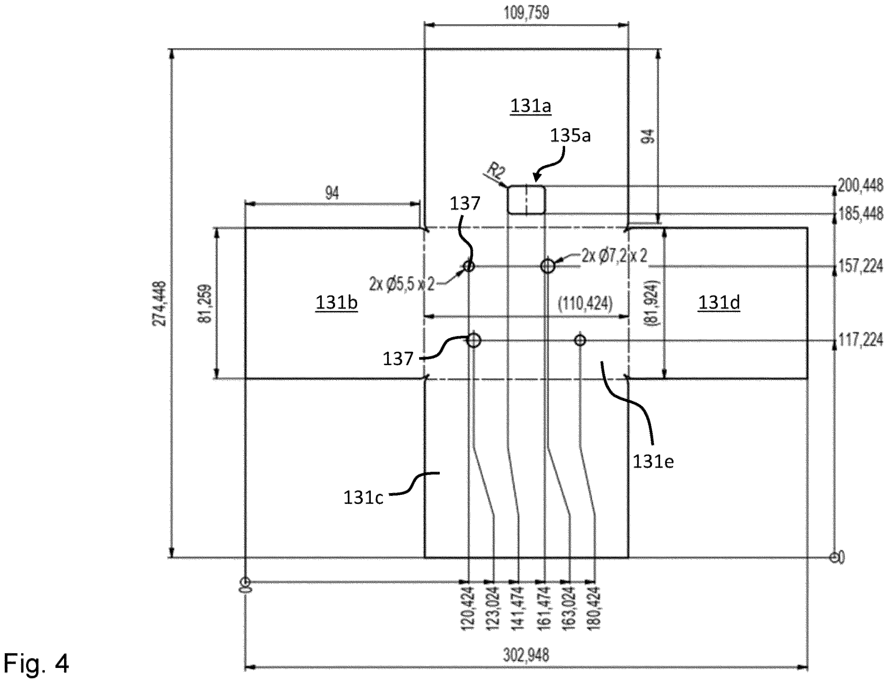

Das Schreib-Lese-Modul 100 in den Figuren 1a-c umfasst eine RFID-Antenne 110, welche in einer Abschirmgehäuseanordnung angeordnet ist. Wie dies nachstehend im Detail beschrieben wird, umfasst die Abschirmgehäuseanordnung ein vorzugsweise metallisches Innengehäuse 120 (auch als Innenschirmung 120 bezeichnet) und ein vorzugsweise metallisches Außengehäuse 130 (auch als Außenschirmung 130 bezeichnet), in welchem das Innengehäuse 120 angeordnet ist. Das Innengehäuse 120 ist rahmenförmig ausgebildet und umfasst vier Seitenwände 121a-d, welche die RFID-Antenne 110 umgeben. Das Außengehäuse 130 umfasst vier Seitenwände 131a-d sowie eine Bodenwand 131e (siehe Figur 4). Das Innengehäuse 120 mit der darin montierten RFID-Antenne 110 ist derart in dem becherförmigen Außengehäuse 130 angeordnet, dass die jeweiligen Seitenwände 121a-d des Innengehäuses 120 von den entsprechenden Seitenwänden 131a-d des Außengehäuses beabstandet sind und der Boden des Innengehäuses 120 von der Bodenwand 131e des Außengehäuses 130 beabstandet ist. Wie sich dies insbesondere den Figuren 1b und 1c entnehmen lässt, umfasst gemäß einer Ausführungsform das Schreib-Lese-Modul 100 hierzu Abstandshalter 140a,b, welche auf der Oberseite der Bodenwand 131e des Außengehäuses 130 angeordnet sind (beispielsweise aufgeschraubt) und ausgebildet sind, das Innengehäuse 120 in einem definierten vertikalen Abstand Dz (in der Figur 2b dargestellt) von der Bodenwand 131e des Außengehäuses 130 zu halten. Gemäß einer Ausführungsform können die Abstandshalter 140a,b aus Kunststoff bestehen. Vorzugsweise sind die Abstandshalter elektrisch nicht leitfähig.

Die RFID-Antenne 110, welche in der in den Figuren 1a-c dargestellten Ausführungsform als eine im Wesentlichen planare Antennenplatine ausgebildet ist, ist in dem Innengehäuse 120 angeordnet und ausgebildet, mit einem auf dem Schreib-Lese-Modul 100 aufliegenden RFID-Tag 220 zu wechselwirken, insbesondere mit einer RFID-Antenne des RFID-Tags 220, um das RFID-Tag 220 mit Daten zu beschreiben und/oder Daten aus dem RFID-Tag 220 auszulesen. Im Rahmen des Beschreibens und/oder Auslesens eines RFID-Tags 220 kann das Schreib-Lese-Modul 100 auch ausgebildet sein, eine Funktionsfähigkeit des RFID-Tags 220 zu überprüfen, beispielsweise eine Resonanzfrequenz einer RFID-Antenne des RFID-Tags 220 zu bestimmen.

Die Figuren 2a und 2b zeigen eine schematische Draufsicht und eine schematische Seitenansicht der Vorrichtung 200 zum Auslesen und/oder Beschreiben einer Vielzahl von RFID-Tags 220 gemäß einer Ausführungsform mit einer als Array angeordneten Vielzahl von Schreib-Lesen-Modulen 100. Bei der in den Figuren 2a und 2b schematisch dargestellten Ausführungsform sind vier Schreib-Lese-Module 100 als ein quadratisches 4x4-Array angeordnet, mit dem bis zu vier RFID-Tags 220 parallel ausgelesen und/oder beschrieben werden können. Der Fachmann wird jedoch erkennen, dass die Vorrichtung 200 in weiteren Ausführungsformen mit einer beliebigen Anzahl von Schreib-Lese-Modulen 100 in Form eines Arrays ausgebildet sein kann. Wie dies in Figur 2b dargestellt ist, kann die Vorrichtung 200 ferner eine Auflageplatte 210 umfassen, welche auf den Schreib-Lese-Modulen 100 aufliegt und eine Auflagefläche für die RFID-Tags 220 definiert. Beispielsweise kann die Auflageplatte 210 als eine Plexiglasplatte ausgebildet sein.

Zur Vermeidung bzw. Verminderung eines Übersprechens zwischen den benachbarten Schreib-Lese-Modulen 100 der Vorrichtung 200 beim parallelen Beschreiben und/oder Auslesen der Vielzahl von RFID-Tags weist wie bereits vorstehend im Zusammenhang mit den Figuren 1a-c beschrieben, jedes Schreib-Lese-Modul 100 eine Abschirmgehäuseanordnung mit einem Innengehäuse 120 und einem Außengehäuse 130 auf, in welchem das Innengehäuse 120 angeordnet ist. Wie dies nachstehend im Detail beschrieben wird, führen das Innengehäuse 120 und das Außengehäuse 130 der Schreib-Lese-Module 100 der Vorrichtung 200 zu einer doppelten Abschirmung zwischen benachbarten Schreib-Lese-Modulen 100. Dabei ist die RFID-Antenne 110 in und somit in der Nähe des Innengehäuses 120 angeordnet, welches gemäß einer Ausführungsform so ausgebildet ist, dass die Resonanzfrequenz und/oder die Impedanz der RFID-Antenne 110 durch das Innengehäuse 120 vernachlässigbar beeinflusst wird.

Das Außengehäuse 130 befindet sich weiter entfernt von der RFID-Antenne 110 als das Innengehäuse 120 und ist gemäß einer Ausführungsform in Form eines Bechers mit rechteckigem Querschnitt ausgebildet, um die RFID-Antenne 110 an fünf Seiten vollständig abzuschirmen, wodurch das Übersprechen zu benachbarten Schreib-Lese-Modulen 100 deutlich reduziert werden kann. Gemäß einer Ausführungsform ist das Außengehäuse 130 ausgebildet und relativ zu dem Innengehäuse 120 mit der darin aufgenommenen RFID-Antenne 110 derart angeordnet, dass das Außengehäuse 130 einen vernachlässigbaren Einfluss auf die Resonanzfrequenz und die Impedanz der in dem Innengehäuse 120 angeordneten RFID-Antenne 110 hat. Dies hat insbesondere den Vorteil, dass die RFID-Antenne 110 nach der Montage (zusammen mit dem Innengehäuse 120) in dem Außengehäuse 130 nicht mehr extra in dieser neuen Umgebung abgestimmt werden muss, sondern eine einmalige Abstimmung der RFID-Antenne 110 nach der Montage in dem Innengehäuse 120 bei der Herstellung des Schreib-Lese-Moduls 100 ausreichend ist.

Wie ferner in der Figur 2b dargestellt, ist gemäß einer Ausführungsform der definierte vertikale Abstand Dz des Innengehäuses 120 mit der darin montierten RFID-Antenne 110 von der Bodenwand 131e des Außengehäuses 130 größer als ein definierter vertikaler Abstand dz zwischen der RFID-Antenne 110 und einer Bodenwand 121e des Innengehäuses 120. Der definierte vertikale Abstand Dz des Innengehäuses 120 mit der darin montierten RFID-Antenne 110 kann wenigstens 5 Zentimeter von der Bodenwand 131e des Außengehäuses 130 betragen.

In einer Ausführungsform sind der eine oder die mehreren Abstandshalter 140a,b ferner ausgebildet, das Innengehäuse 120 mit der darin montierten RFID-Antenne 110 in einem definierten horizontalen Abstand Dx zwischen zumindest einer Seitenwand 121a-d des Innengehäuses 120 und der entsprechenden Seitenwand 131a-d des Außengehäuses 130 zu halten. Der definierte horizontalen Abstand Dx zwischen der zumindest einen Seitenwand 121a-d des Innengehäuses 120 und der entsprechenden Seitenwand 131a-d des Außengehäuses 130 kann wenigstens 1 Zentimeter betragen.

Der definierte vertikale Abstand Dz des Innengehäuses 120 mit der darin montierten RFID-Antenne 110 von der Bodenwand 131e des Außengehäuses 130 kann größer als der definierte horizontale Abstand Dx zwischen der zumindest einen Seitenwand 121a-d des Innengehäuses 120 und der entsprechenden Seitenwand 131a-d des Außengehäuses 130 sein.

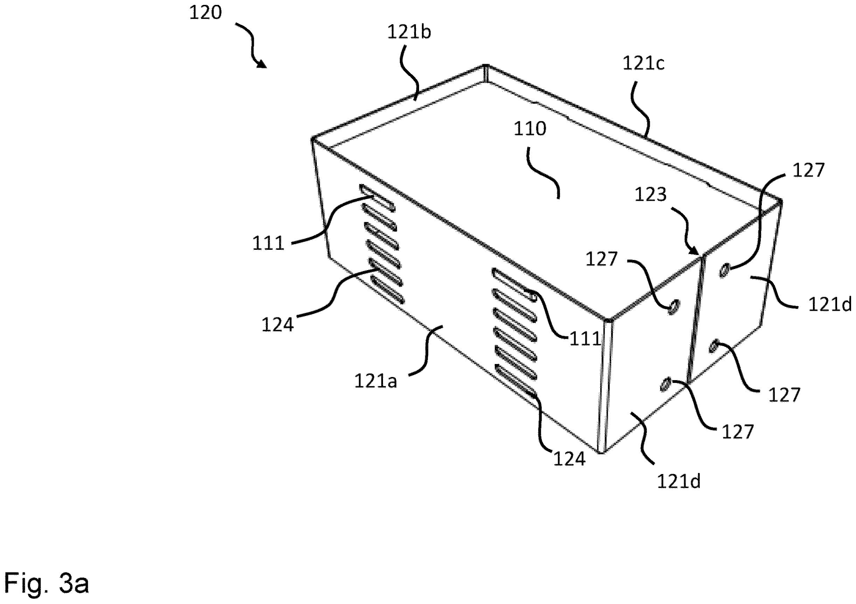

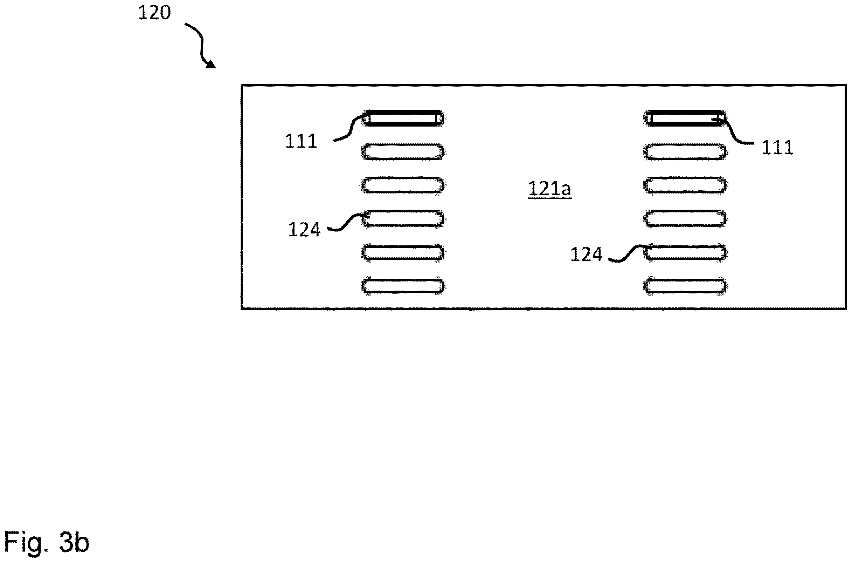

Eine bevorzugte erfindungsgemäße Ausgestaltung des Innengehäuses 120 und das Außengehäuses 130 eines Schreib-Lese-Moduls 100 der Vorrichtung 200 ist in den Figuren 1a-c und den Figuren 3a-d dargestellt. Bei der dargestellten bevorzugten Ausführungsform ist das Innengehäuse 120, in welchem die RFID-Antenne 110 montiert ist, als ein um die RFID-Antenne 110 herumlaufender Rahmen ausgebildet. Die Ausgestaltung des Innengehäuses 120 als ein umlaufender Rahmen hat den Vorteil, dass die Resonanzfrequenz und die Impedanz der RFID-Antenne 110 nur minimal beeinflusst wird. Weiterhin kann gemäß einer Ausführungsform das als Rahmen ausgebildete Innengehäuse 120 fest mit der RFID-Antenne 110 verbunden sein, so dass der Einfluss des Innengehäuses 120 auf die Resonanzfrequenz und die Impedanz der RFID-Antenne 110 durch eine geeignete Abstimmung der RFID-Antenne 110, beispielsweise bei der Herstellung der Vorrichtung 200 kompensiert werden kann. Gemäß einer Ausführungsform kann die RFID-Antenne 110 zur Abstimmung der Resonanzfrequenz und der Impedanz einen geeigneten Kondensator aufweisen. Hierzu kann die RFID-Antenne 110 beispielsweise einen oder mehrere verstellbare Drehkondensatoren in einem elektrischen Anpassungsnetzwerk der RFID-Antenne 110 umfassen, welches am Ausgang einer Antennenspule der RFID-Antenne 110 angebracht ist. Das elektrische Anpassungsnetzwerk der RFID-Antenne 110 dient dazu, die Impedanz der RFID-Antenne 110 an die Impedanz einer RFID-Elektronik (meist 50 Ohm) anzupassen. Damit wird gewährleistet, dass die von der RFID-Elektronik gelieferte elektrische Leistung vollständig über die RFID-Antenne 110 abgestrahlt wird.

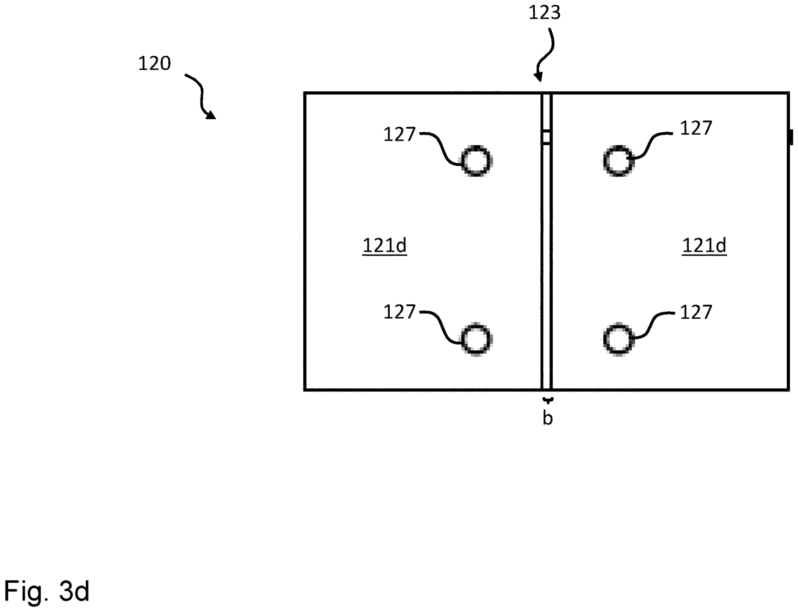

Wie sich dies insbesondere den Figuren 3a und 3d entnehmen lässt, kann gemäß einer Ausführungsform das rahmenförmig ausgebildete Innengehäuse 120 aus einem oder mehreren Segmenten bestehen, welche über einen Luftspalt 123 isolierend miteinander verbunden sind. Aufgrund der Segmentierung des rahmenförmig ausgebildeten Innengehäuses 120 durch den beispielhaft in der Seitenwand 121d ausgebildeten Luftspalt 123 kann verhindert werden, dass ringförmig umlaufende Wirbelströme in dem rahmenförmig ausgebildeten Innengehäuse 120 aufgebaut werden. In einer in der Figur 3d dargestellten Ausführungsform hat der Luftspalt 123 eine Breite b zwischen 0,1, 0,2, 0,3 oder 0,4 und 0,6, 0,7, 0,8, 0,9 oder 1 Millimeter, insbesondere ungefähr 0,5 Millimeter. Gemäß einer Ausführungsform besteht das Innengehäuse 120 aus Aluminium. Gemäß einer Ausführungsform kann das Innengehäuse 120 als ein geeignet gebogenes umlaufendes Blech ausgebildet sein, welches die RFID-Antenne 110 rahmenförmig umgibt. Dabei können die beiden Enden des Bleches (in den Figuren die Abschnitte der Seitenwand 121d) mit einem Kunststoffverbinder aneinander befestigt sein, der in Stecköffnungen 127 in der Seitenwand eingebracht ist.

Gemäß einer Ausführungsform können die Seitenwände 121a und 121c des Innengehäuses 120 eine Vielzahl von parallelen Aufnahmeschlitzen 124 aufweisen, welche paarweise bei unterschiedlichen Höhen der Seitenwände 121a und 121c des Innengehäuses 120 ausgebildet sind, um Vorsprünge bzw. Nasen 111 an den Seitenkanten der RFID-Antenne zur Befestigung der RFID-Antenne 110 in dem Innengehäuse 120 aufzunehmen. Aufgrund der Vielzahl von Aufnahmeschlitzen 124 bei unterschiedlichen Höhen der Seitenwände 121a und 121c kann die Höhe der RFID-Antenne 110 innerhalb des Innengehäuses 120 geeignet gewählt werden.

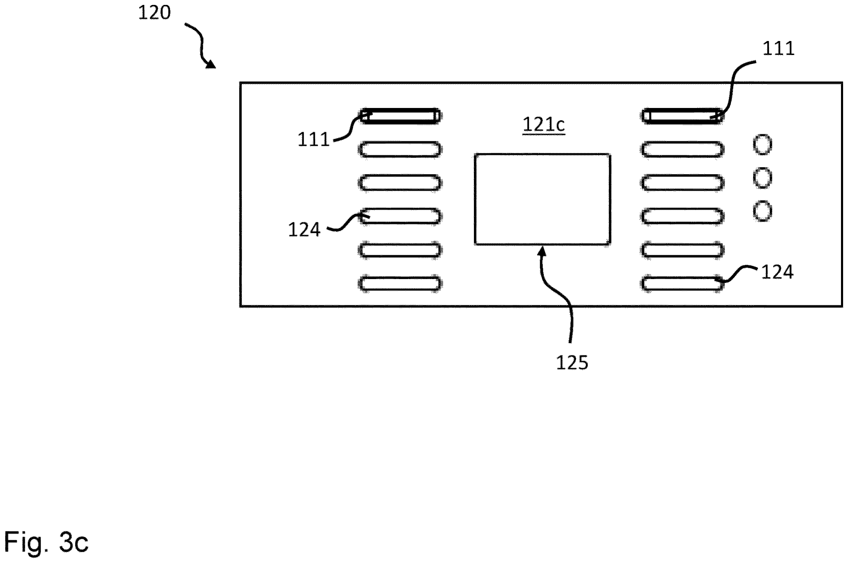

Wie in den Figuren 1c und 3c dargestellt, kann beispielsweise in der Seitenwand 121c des Innengehäuses 120 ferner eine Öffnung 125 für Versorgungs- und/oder Signalkabel für die RFID-Antenne 110 ausgebildet sein.

Wie bereits vorstehend beschrieben, ist das Außengehäuse 130 mit den Seitenwänden 131a-d und der Bodenwand 131e in Form eines Bechers mit rechteckigem Querschnitt ausgebildet, also als ein an fünf Seiten geschlossenes Außengehäuse 130, in dem die RFID-Antenne 110 zusammen mit dem Innengehäuse 120 von oben eingesetzt werden kann. Um den Einfluss des Außengehäuses 130 auf die Resonanzfrequenz und die Impedanz der (bereits abgestimmten) RFID-Antenne 110 so weit wie möglich zu beschränken, ist das Außengehäuse 130 hoch gebaut, so dass sich das von der RFID-Antenne 110 erzeugte elektromagnetische Feld auch unterhalb der RFID-Antenne 110, d.h. zwischen der Unterseite der RFID-Antenne 110 und der Bodenwand 131e des Außengehäuses 130 ausdehnen kann. Gemäß einer Ausführungsform beträgt der vertikale Abstand Dz zwischen der Bodenwand 131e des Außengehäuses 130 und dem Innengehäuse 120 bzw. der darin montierten RFID-Antenne 110 wenigstens 5 cm, vorzugsweise wenigstens 7 cm. Wie in den Figuren dargestellt, kann der jeweilige horizontale Abstand Dx zwischen den Seitenwänden 121a-d des Innengehäuses 120 und den entsprechenden Seitenwänden 131a-d des Außengehäuses 130 kleiner als der vertikale Abstand Dz zwischen der Bodenwand 131e des Außengehäuses 130 und dem Innengehäuse 120 bzw. der darin montierten RFID-Antenne 110 sein.

Wie in den Figuren 1a-c dargestellt, können beispielsweise in den Seitenwänden 131a und/oder 131c des Außengehäuses 130 ferner eine oder mehrere Öffnungen 135a,b für Versorgungs- und/oder Signalkabel für die RFID-Antenne 110 ausgebildet sein.

Gemäß einer Ausführungsform besteht das Außengehäuse 130 mit den Seitenwänden 131a-d und der Bodenwand 131e aus Aluminium. Figur 4 zeigt eine Draufsicht eines zugeschnittenen Bleches mit beispielhaften Abmessungen zum Ausbilden des Außengehäuses 130 eines Schreib-Lese-Moduls 100 der Vorrichtung 200 gemäß einer Ausführungsform. Wie sich Figur 4 entnehmen lässt, können die Seitenwände 131a-d des Außengehäuses 130 ausgebildet werden, indem die Seitenteile des in Figur 4 gezeigten Bleches hochgebogen werden. Gemäß einer Ausführungsform sind die Kanten der Seitenteile des in Figur 4 gezeigten Bleches so ausgebildet, dass die Seitenwände 131a-d des Außengehäuses 130 sich nicht berühren, sondern zwischen den jeweils benachbarten Seitenwänden 131a-d ein jeweiliger Luftspalt 133a-d ausgebildet wird. In einer Ausführungsform hat ein jeweiliger Luftspalt 133a-d eine Breite zwischen 0,1, 0,2, 0,3 oder 0,4 und 0,6, 0,7, 0,8, 0,9 oder 1 Millimeter, insbesondere ungefähr 0,5 Millimeter. Die Segmentierung des Außengehäuses 130 durch die Luftspalte 133a-d dient dazu, dass sich in dem Außengehäuse keine ringförmigen Wirbelströme aufbauen können, die das von der RFID-Antenne 110 erzeugte elektromagnetische Feld schwächen könnten.

Wie in der Figur 4 ferner dargestellt, kann die Bodenwand 131e des Außengehäuses 130 eine Vielzahl von Befestigungslöchern 137 zur Befestigung der Abstandshalter 140a,b und/oder für eine Befestigung des entsprechenden Schreib-Lese-Moduls 100 auf einem Grundkörper der Vorrichtung 200 umfassen.

### BEZUGSZEICHENLISTE

- 100: Schreib-Lese-Modul bzw. RFID-Reader

- 110: RFID-Antenne
- 111: Nasen der RFID-Antenne

- 120: Innengehäuse
- 121a-d: Seitenwände des Innengehäuses
- 121e: Bodenwand des Innengehäuses
- 123: Luftspalt in einer der Seitenwände des Innengehäuses
- 124: Schlitze zur Aufnahme der Antennennasen
- 125: Öffnung in einer Seitenwand des Innengehäuses
- 127: Stecköffnungen für Verschluss des Innengehäuses

- 130: Außengehäuse
- 131a-d: Seitenwände des Außengehäuses
- 131e: Bodenwand des Außengehäuses
- 133a-d: Luftspalte zwischen den Seitenwänden des Außengehäuses
- 135a,b: Öffnungen in Seitenwänden des Außengehäuses
- 137: Befestigungslöcher

- 140a,b: Abstandshalter zwischen Innengehäuse und Außengehäuse

- 200: Vorrichtung zum parallel Beschreiben und/oder Auslesen einer Vielzahl von RFID-Tags
- 210: Auflageplatte
- 220: RFID-Tags

- b: Breite des Luftspalts in einer der Seitenwände des Innengehäuses
- Dx: horizontaler Abstand zwischen den Seitenwänden von Innen- und Außengehäuse
- dz: vertikaler Abstand zwischen der RFID-Antenne und der Bodenwand des Innengehäuses
- Dz: vertikaler Abstand zwischen den Bodenwänden von Innen- und Außengehäuse

## Patentansprüche

1. Vorrichtung (200) zum parallelen Beschreiben und/oder Auslesen einer Vielzahl von RFID-Tags (220), wobei die Vorrichtung (200) für jeden RFID-Tag (220) ein Schreib-Lese-Modul (100) umfasst, wobei jedes Schreib-Lese-Modul (100) eine Abschirmgehäuseanordnung (120, 130) mit einem Innengehäuse (120) und einem Außengehäuse (130) sowie eine RFID-Antenne (110) umfasst, welche in dem Innengehäuse (120) angeordnet ist und ausgebildet ist, mit dem RFID-Tag (220) zu wechselwirken, wobei das Innengehäuse (120) und das Außengehäuse (130) beabstandet voneinander angeordnet sind und ausgebildet sind, ein Übersprechen zu einem benachbarten Schreib-Lese-Modul (100) zu verhindern.

2. Vorrichtung (200) nach Anspruch 1, wobei das Innengehäuse (120) aus Aluminium besteht.

3. Vorrichtung (200) nach Anspruch 1 oder 2, wobei das Innengehäuse (120) Seitenwände (121a-d) umfasst, welche einen um die RFID-Antenne (110) umlaufenden Rahmen definieren.

4. Vorrichtung (200) nach Anspruch 3, wobei das Innengehäuse (120) ein gebogenes Blech umfasst.

5. Vorrichtung (200) nach Anspruch 3 oder 4, wobei zur Vermeidung von Wirbelströmen in dem Innengehäuse (120) in zumindest einer Seitenwand (121a-d) des Innengehäuses (120) ein Luftspalt (123) ausgebildet ist.

6. Vorrichtung (200) nach Anspruch 5, wobei der in zumindest einer der Seitenwände (121a-d) des Innengehäuses (120) ausgebildete Luftspalt (123) eine Breite (b) zwischen 0,1, 0,2, 0,3 oder 0,4 und 0,6, 0,7, 0,8, 0,9 oder 1 Millimeter, insbesondere ungefähr 0,5 Millimeter aufweist.

7. Vorrichtung (200) nach einem der vorhergehenden Ansprüche, wobei das Außengehäuse (130) Seitenwände (131a-d) und eine Bodenwand (131e) umfasst, welche einen das Innengehäuse (120) mit der darin montierten RFID-Antenne (110) umschließenden Becher mit rechteckigem Querschnitt definieren.

8. Vorrichtung (200) nach Anspruch 7, wobei jedes Schreib-Lese-Modul (100) ferner einen oder mehrere Abstandshalter (140a,b) umfasst, welche ausgebildet sind, das Innengehäuse (120) mit der darin montierten RFID-Antenne (110) in einem definierten vertikalen Abstand (Dz) von der Bodenwand (131e) des Außengehäuses (130) zu halten.

9. Vorrichtung (200) nach Anspruch 8, wobei der definierte vertikale Abstand (Dz) des Innengehäuses (120) mit der darin montierten RFID-Antenne (110) wenigstens 5 Zentimeter von der Bodenwand (131e) des Außengehäuses (130) beträgt.

10. Vorrichtung (200) nach Anspruch 8 oder 9, wobei der definierte vertikale Abstand (Dz) des Innengehäuses (120) mit der darin montierten RFID-Antenne (110) von der Bodenwand (131e) des Außengehäuses (130) größer als ein definierter vertikaler Abstand (dz) zwischen der RFID-Antenne (110) und einer Bodenwand (121e) des Innengehäuses (120) ist.

11. Vorrichtung (200) nach einem der Ansprüche 8 bis 10, wobei der eine oder die mehreren Abstandshalter (140a,b) ferner ausgebildet sind, das Innengehäuse (120) mit der darin montierten RFID-Antenne (110) in einem definierten horizontalen Abstand (Dx) zwischen zumindest einer Seitenwand (121a-d) des Innengehäuses (120) und der entsprechenden Seitenwand (131a-d) des Außengehäuses (130) zu halten und wobei der definierte horizontalen Abstand (Dx) zwischen der zumindest einen Seitenwand (121a-d) des Innengehäuses (120) und der entsprechenden Seitenwand (131a-d) des Außengehäuses (130) wenigstens 1 Zentimeter beträgt.

12. Vorrichtung (200) nach Anspruch 11, wobei der definierte vertikale Abstand (Dz) des Innengehäuses (120) mit der darin montierten RFID-Antenne (110) von der Bodenwand (131e) des Außengehäuses (130) größer als der definierte horizontale Abstand (Dx) zwischen der zumindest einen Seitenwand (121a-d) des Innengehäuses (120) und der entsprechenden Seitenwand (131a-d) des Außengehäuses (130) ist.

13. Vorrichtung (200) nach einem der Ansprüche 7 bis 12, wobei das Außengehäuse (130) ein gebogenes Blech umfasst.

14. Vorrichtung (200) nach einem der Ansprüche 7 bis 13, wobei zur Vermeidung von Wirbelströmen in dem Außengehäuse (130) zwischen zumindest einem Paar von benachbarten Seitenwänden (131a-d) des Außengehäuses (130) ein Luftspalt (133a-d) ausgebildet ist.

15. Vorrichtung (200) nach Anspruch 14, wobei der zwischen zumindest einem Paar von benachbarten Seitenwänden (131a-d) des Außengehäuses (130) ausgebildete Luftspalt (123) eine Breite zwischen 0,1, 0,2, 0,3 oder 0,4 und 0,6, 0,7, 0,8, 0,9 oder 1 Millimeter, insbesondere ungefähr 0,5 Millimeter aufweist.
